# EUROPÄISCHE PATENTSCHRIFT

(11) **EP 1 897 381 B1**
(45) Veröffentlichungstag und Bekanntmachung des Hinweises auf die Patenterteilung: **14.03.2012**
(21) Anmeldenummer: 06754199.5
(22) Anmeldetag: 08.06.2006
(51) Int. Cl.: H04Q 1/14

(54) **VERTEILEREINRICHTUNG EINER TELEKOMMUNIKATIONSANLAGE SOWIE KENNZEICHNUNGSEINRICHTUNG FÜR EINE VERTEILEREINRICHTUNG**
DISTRIBUTING UNIT FOR A TELECOMMUNICATIONS SYSTEM AND IDENTIFICATION DEVICE FOR A DISTRIBUTING UNIT
DISPOSITIF DE DISTRIBUTION D'UNE INSTALLATION DE TELECOMMUNICATION ET DISPOSITIF DE CARACTERISATION POUR UN DISPOSITIF DE DISTRIBUTION

(30) Priorität: 28.06.2005 DE 202005010263 U
(43) Veröffentlichungstag der Anmeldung: 12.03.2008
(73) Patentinhaber: CCS Technology, Inc., Wilmington, DE 19803 (US)
(72) Erfinder: HOFFMANN, Wolfgang, 58097 Hagen (DE); VOGT, Rainer, 45897 Gelsenkirchen (DE); LIPKOWSKI, Marc, 58640 Iserlohn (DE); ZIMMER, Rainer, 58579 Schalksmühle (DE); SCHULTE, Wolfgang, 58339 Breckerfeld (DE)
(74) Vertreter: Sturm, Christoph
(86) Internationale Anmeldenummer: PCT/EP2006/005445
(87) Internationale Veröffentlichungsnummer: WO 2007/000227

(56) Entgegenhaltungen:
- WO-A-90/13156
- FR-A1- 2 665 044

## Beschreibung

Die Erfindung betrifft eine Verteilereinrichtung einer Telekommunikationsanlage nach dem Oberbegriff des Anspruchs 1. Des Weiteren betrifft die Erfindung eine Kennzeichnungseinrichtung für eine Verteilereinrichtung nach dem Oberbegriff des Anspruchs 8.

Aus dem Produktkatalog "Anschluss- und Verteilersysteme, Ausgabe 1, Seite 54, Jahr 2000, Coming Cable Systems GmbH & Co. KG* ist eine als Verteilerblock ausgebildete Verteilereinrichtung bekannt, die mehrere übereinander angeordnete Verteilerleisten aufweist. Die Verteilerleisten werden von Drahtführungselementen und Funktionselementen für den Anschluss ankommender bzw. abgehender Kabetadem gebildet Die dort offenbarte Verteilereinrichtung verfügt weiterhin Ober eine Kennzeichnungseinrichtung zur Kennzeichnung der Belegung der Funktionselemente, wobei die Kennzeichnungseinrichtung von Streifenhaltem gebildet wird, wobei jeder Verteilerleiste bzw. jedem Funktionselement ein separater Streifenhalter zugeordnet ist. Die Streifenhalter sind im Bereich einer Verteilerleiste auf dieselben aufsteckbar und in dieser aufgesteckten Position an der Verteilereinrichtung fixiert. Die Streifenhalter verdecken die Funktionselemente der Verteilerleisten, wobei zum Anschließen ankommender bzw. abgehender Kabeladern an den Funktionselementen die Streifenhalter umgeklappt werden können. Jedoch ist auch bei umgeklappten Streifenhaltern die Zugänglichkeit der Funktionselemente eingeschränkt. Des Weiteren ist bei umgeklappten Streifenhaltern ein denselben zugeordneter Belegungskennzeichnungsstreifen nur eingeschränkt sichtbar. Die aus dem Stand der Technik bekannten Kennzeichnungseinrichtungen einer Verteilereinrichtung verfügen demnach Ober eine eingeschränkte Funktionalität.

Eine Verteilereinrichtung gemäß dem Oberbegriff des Anspruchs 1 ist aus FR 2 665 044A1 bekannt.

Hiervon ausgehend liegt der vorliegenden Erfindung das Problem zur Grunde, eine neuartige Verteilereinrichtung einer Telekommunlkationsanlage und eine neuartige Kennzeichnungseinrichtung für eine Verteilereinrichtung zu schaffen.

Dieses Problem wird durch eine Verteilereinrichtung einer Telekommunikationsanlage mit den Merkmalen des Anspruchs 1 gelöst.

Im Sinne der hier vorliegenden Erfindung wird vorgeschlagen, dass die Kennzeichnungseinrichtung mindestens einen verschiebbaren Streifen halter aufweist. Durch die Verschiebbarkeit des Streifenhalters relativ zu den Verteilerleisten bzw. Funktionselementen der VerteilereInrichtung ist es möglich, die Anzahl der benötigten Streifenhafter zu reduzieren, da ein Streifenhalter an die Verteilerleiste einer Verteilereinrichtung verschoben werden kann, an welcher Installationsarbeiten durchgeführt werden sollen. Weiterhin wird die Zugänglichkeit der Funktionselemente durch einen derartigen verschiebbaren Streifenhalter nicht beeinträchtigt. Bei Installationsarbeiten sind demnach die Funktionselemente zum Anschluss angehender bzw. abgehender Kabeladem frel zugänglich. Hierdurch erleichtem bzw. beschleunigen sich Installationsarbeiten an einer Verteilereinrichtung.

Vorzugsweise ist der oder jeder Streifen halter in seiner Relativposition zu den Verteilerleisten bzw. Funktionselementen arretierbar, vorzugsweise durch formschlüssigen oder reibschlüssigen Kontakt mit Führungsschienen, an welchen der jeweilige Streffenhalter geführt ist.

Die erfindungsgemäße Kennzeichnungseinrichtung für eine Verteilereinrichtung ist im unabhängigen Anspruch 8 definiert

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1: eine erfindungsgemäße Verteilereinrichtung einer Telekommunikationsanlage zusammen mit einer erfindungsgemäßen Kennzeichnungseinrichtung in perspektivischer Vorderansicht;
- Fig. 2: einen Ausschnitt aus der erfindungsgemäßen Verteilereinrichtung gemäß Fig. 1 in perspektivischer Vorderansicht;
- Fig. 3: den Ausschnitt gemäß Fig. 1 ohne die erfindungsgemäße Kennzeichnungseinrichtung in perspektivischer Vorderansicht;
- Fig. 4:: einen Streifenhalter der erfindungsgemäßen Kennzeichnungseinrichtung in perspektivischer Vorderansicht;
- Fig. 5:: den Streifenhalter gemäß Fig. 4 in perspektivischer Rückansicht;
- Fig. 6:: eine Führungsschiene der erfindungsgemäßen Kennzeichnungseinrichtung in perspektivischer Vorderansicht;
- Fig. 7:: eine alternative, erfindungsgemäße Kennzeichnungseinrichtung in perspektivischer Vorderansicht;
- Fig. 8:: die Kennzeichnungseinrichtung der Fig. 7 in perspektivischer Rückansicht.

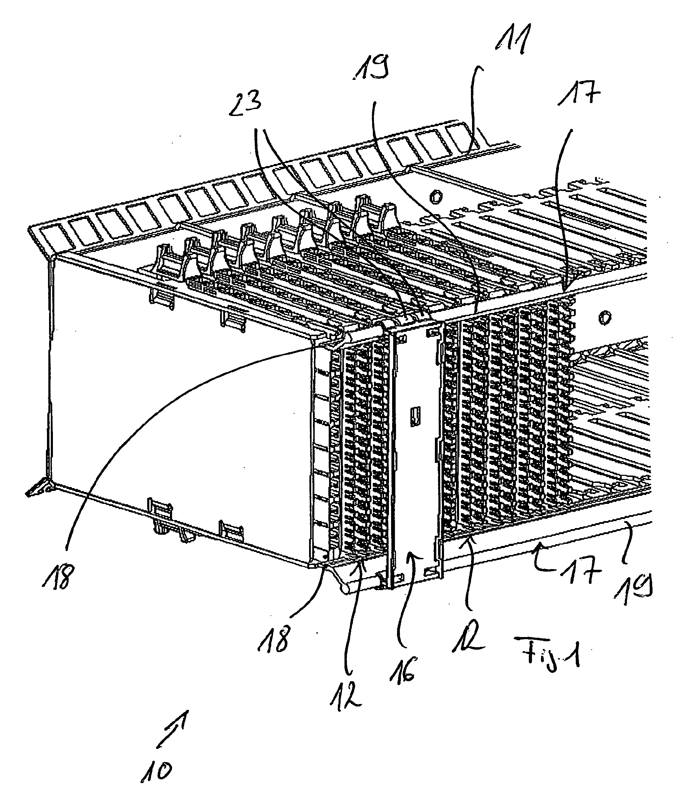

Nachfolgend wird die hier vorliegende Erfindung zuerst unter Bezugnahme auf das in Fig. 1 bis 6 gezeigte, bevorzugte Ausführungsbeispiel der hier vorliegenden Erfindung in größerem Detail beschrieben.

Fig. 1 zeigt einen Ausschnitt aus einer erfindungsgemäßen Verteilereinrichtung einer Telekommunikationsanlage, die im gezeigten Ausführungsbeispiel als Verteilerblock 10 ausgebildet ist. Der Verteilerblock 10 umfasst im gezeigten Ausführungsbeispiel eine Aufnahmewanne 11, wobei in der Aufnahmewanne 11 mehrere Verteilerleisten 12 sandwichartig übereinander angeordnet sind. Die Verteilerleisten werden von Funktionselementen 13 sowie Drahtführungselementen 14 gebildet.

Im Ausführungsbeispiel der Fig. 1 ist zwischen zwei benachbarten Funktionselementen jeweils mindestens ein Drahtführungselement positioniert. Die Funktionselemente 13 verfügen über als IDC-Kontakte ausgebildete Klemmelemente 15, die dem Anschluss ankommender bzw. abgehender Kabeladern dienen. Die Klemmelemente 15 sind dabei je Funktionselement 13 in Form von zwei parallel zueinander verlaufenden Reihen angeordnet.

Der Verteilereinrichtung ist eine Kennzeichnungseinrichtung zur Kennzeichnung der Belegung der Funktionselemente 13 bzw. der Klemmelemente 15 der Funktionselemente 13 zugeordnet. Im Sinne der hier vorliegenden Erfindung verfügt die Kennzeichnungseinrichtung über einen verschiebbaren Streifenhalter 16, der im Ausführungsbeispiel der Fig. 1 bis 6 an Führungsschienen 17 geführt bzw. gelagert ist, und der parallel zur Erstreckung der Führungsschienen 17 über die bzw. entlang der Verteilerleisten 12 bzw. der Funktionselemente 13 des Verteilerblocks 10 verschiebbar ist. Durch die Verschiebbarkeit des Streifenhalters 16 ist dieser stets in den Bereich der Verteilerleiste 12 bzw. des Funktionselements 13 verschiebbar, an dessen Klemmelementen 15 Installationsarbeiten durchzuführen sind. Dabei sind die Klemmelemente 15 zu Installationsarbeiten stets frei zugänglich. Installationsarbeiten werden demnach durch den Streifenhalter 16 der Kennzeichnungseinrichtung nicht behindert. Da im Bereich des gesamten Verteilerblocks 10 mit einem einzigen Streifenhalter 16 gearbeitet werden kann, reduzieren sich gegenüber der aus dem Stand der Technik bekannten Lösung, bei welcher für jede Verteilerleiste bzw. für jedes Funktionselement ein separater Streifenhalter erforderlich ist, die Kosten.

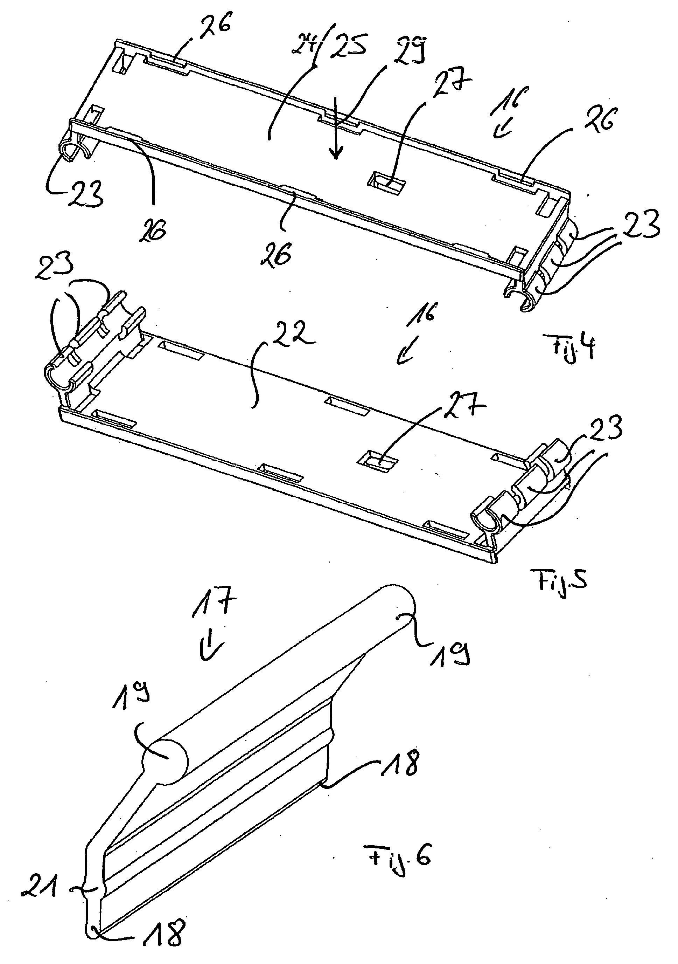

Die Führungsschienen 17 (siehe Fig. 6) verfügen über zwei sich parallel zu den Verteilerleisten 12 bzw. Funktionselementen 13 verlaufende Kanten 18 und 19. Mit einer Kante 18 sind die Führungsschienen 17 am Verteilerblock 10 befestigt, wobei im gezeigten Ausführungsbeispiel diese Kanten 18 der Führungsschienen 17 in Verankerungselemente 20 der Funktionselemente 13 einsteckbar bzw. einrastbar sind.

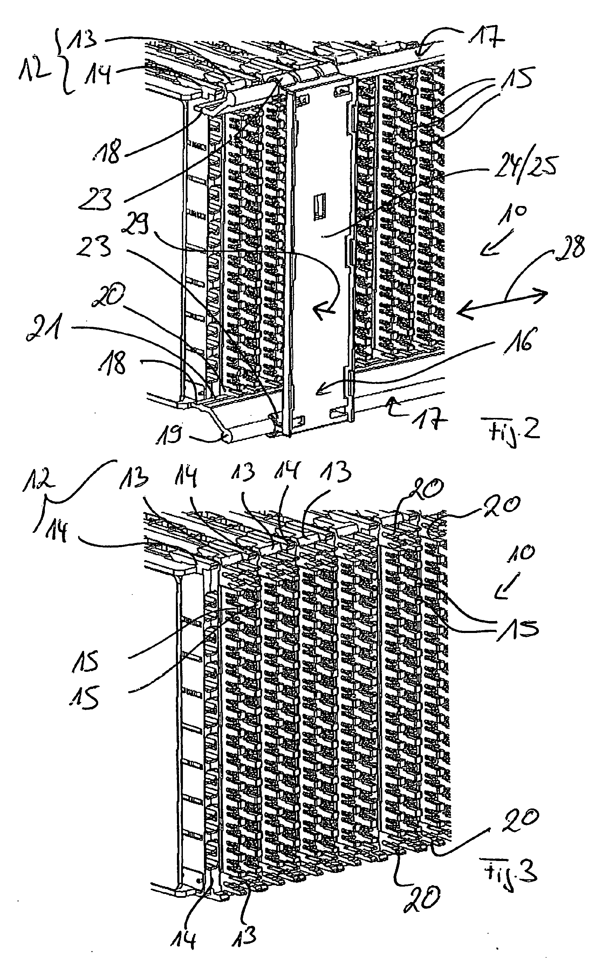

Die Verankerungselemente 20 erstrecken sich seitlich neben den Klemmelementen 15 der Funktionselemente 13 und werden jeweils von zwei Schenkeln (siehe Fig. 3) gebildet, zwischen welchen die erste Kante 18 einer Führungsschiene 17 eingeführt bzw. verrastet werden kann. Die Führungsschienen 17 werden in ihrer Position am Verteilerblock 10 dadurch fixiert, dass die Verankerungselemente 20 der Funktionselemente 13 einen wulstartigen Vorsprung 21 der jeweiligen Führungsschiene 17, welcher sich parallel zur Kante 18 erstreckt, widerhakenartig umgreifen.

An der anderen Kante 19 der Führungsschienen 17 ist der Streifenhalter 16 befestigt bzw. gelagert. Hierzu sind dem Streifenhalter 16 an einer Unterseite 22 desselben klippartige Halteelemente 23 zugeordnet, über welche der Streifenhalter 16 auf die Kante 19 der Führungsschienen 17 aufgesteckt werden kann. Die klippartigen Halteelemente 23 sind im Bereich der Unterseite 22 zu beiden Seiten des Streifenhalters 16 angeordnet.

Auf einer Oberseite 24 des Streifenhalters 16 ist ein Aufnahmeabschnitt 25 für einen Belegungskennzeichnungsstreifen ausgebildet, um die Belegung der Funktionselemente 13 bzw. der Klemmelemente 15 der Funktionselemente 13 zu kennzeichnen. Ein nicht-dargestellter Belegungskennzeichnungsstreifen wird im Bereich des Aufnahmeabschnitts 25 durch Führungselemente 26 des Streifenhalters 16 geführt und in seiner Position im Aufnahmeabschnitt 25 über einen nasenartigen Vorsprung 27 gesichert.

Der nasenartige Vorsprung 27 steht dabei, wie Fig. 4 und 5 entnommen werden kann, in Richtung auf die Oberseite 24 des Streifenhalters 16 geringfügig vor, um einen Belegungskennzeichnungsstreifen gegen die Führungselemente 26 zu drücken und so denselben in seiner Position zu sichern. Der Belegungskennzeichnungsstreifen wird vorzugsweise von einem Papierstreifen und einem den Papierstreifen überdeckenden Klarsichtstreifen gebildet.

Wie bereits erwähnt, ist der Streifenhalter 16 über die Halteelemente 23 an den Kanten 19 der Führungsschienen 17 befestigt bzw. gelagert und hierdurch im Sinne des Doppelpfeils 23 (siehe Fig. 2) parallel zu den Führungsschienen 17 und damit parallel zu den sandwichartig übereinander angeordneten Verteilerleisten 12 bzw. Funktionselementen 13 verschiebbar. In einer Ruhestellung wird der Streifenhalter 16 in seiner Position relativ zu den Führungsschienen 17 bzw. zu den Verteilerleisten 12 bzw. Funktionselementen 13 formschlüssig bzw. reibschlüssig an den Führungsschienen 17 arretiert.

Die Arretierung ist im Ausführungsbeispiel der Fig. 1 bis 6 dadurch aufhebbar, dass auf den Streifenhalter 16 im Sinne des Pfeils 29 (siehe Fig. 2 und 4) eine Kraft ausgeübt wird, die senkrecht zu der Erstreckung der Führungsschienen 17 verläuft und eine Durchbiegung des Streifenhalters 16 bewirkt. Ein auf diese Weise gebogener Streifenhalter 16 kann dann leichtgängig entlang der Führungsschienen 17 bzw. der Funktionselemente 13 im Sinne des Doppelpfeils 28 verschoben werden. Es sei darauf hingewiesen, dass auch andere Mechanismen zum Aufbauen bzw. Lösen einer formschlüssigen bzw. reibschlüssigen Arretierung möglich sind.

Im Ausführungsbeispiel der Fig. 1 bis 6 erstrecken sich die Führungsschienen 17 parallel zu mehreren in horizontaler Richtung nebeneinander bzw. in vertikaler Richtung übereinander angeordneten Verteilerleisten bzw. Funktionselementen, wobei die Breite des Streifenhalters 16 dabei mindestens der Breite einer Verteilerleiste bzw. eines Funktionselements entspricht. Es sei an dieser Stelle darauf hingewiesen, dass auch Anordnungen denkbar sind, in welchen die Breite des Streifenhalters der Breite mehrerer Verteilerleisten bzw. Funktionselemente entspricht. So könnten z. B. im Sinne der hier vorliegenden Erfindung zwei in Fig. 1 dargestellte Verteilerblöcke 10 nebeneinander bzw. übereinander angeordnet sein, wobei sich dann ein Streifenhalter 16 über Verteilerleisten bzw. Funktionselemente von nebeneinander bzw. übereinander angeordneten Verteilerblöcken erstreckt.

Im Ausführungsbeispiel der Fig. 1 bis 6 ist die Verteilereinrichtung als Verteilerblock mit einer Aufnahmewanne und in der Aufnahmewanne positionierten Verteilerleisten aus Funktionselementen und Drahtführungselementen gebildet. Die Erfindung ist jedoch nicht auf diese konkrete Ausgestaltung einer Verteilereinrichtung beschränkt. Die Erfindung kann vielmehr auch bei Verteilereinrichtungen eingesetzt werden, die über keine derartige Aufnahmewanne verfügen, bei der vielmehr Verteilerleisten bzw. Funktionselemente z. B. in einem Gestell oder einem sonstigen Rahmen übereinander und/oder nebeneinander angeordnet sind.

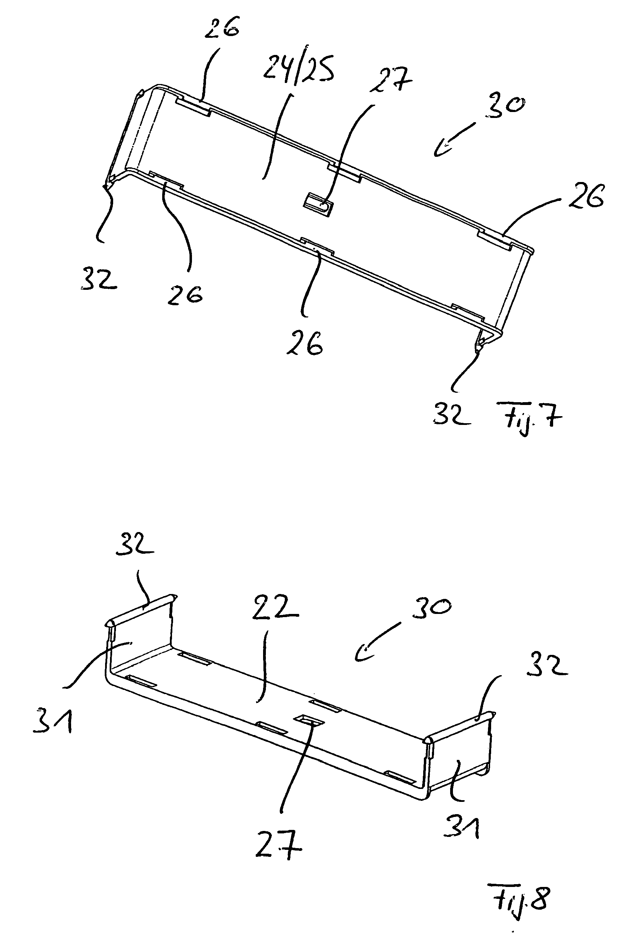

Fig. 7 und 8 zeigen ein Ausführungsbeispiel der hier vorliegenden Erfindung, bei welchem die Kennzeichnungseinrichtung ausschließlich von einem verschiebbaren Streifenhalter 30 gebildet wird, die demnach ohne Führungsschienen zur Lagerung des Streifenhalters 30 auskommt. Im Ausführungsbeispiel der Fig. 7 und 8 sind an abgewinkelten Vorsprüngen 31 des Streifenhalters 30 Abschnitte 32 ausgebildet, mit welchen der Streifenhalter 30 unmittelbar in die Verankerungselemente 20 der Funktionselemente 13 eingesteckt werden kann. Der Streifenhalter 30 kann dann entlang der übereinander und/oder nebeneinander angeordneten Verteilerleisten 12 bzw. Funktionselemente 13 verschoben werden. Hinsichtlich der mit den Bezugsziffern 24, 25, 26 und 27 bezifferten Elemente stimmt der Streifenhalter 30 der Fig. 7 und 8 mit dem Streifenhalter 16 der Fig. 1 bis 6 überein, so dass zur Vermeidung unnötiger Wiederholungen auf die diesbezüglichen Ausführungen verwiesen wird.

### Bezugszeichenliste

- 10: Verteilereinrichtung
- 11: Aufnahmewanne
- 12: Verteilerleiste
- 13: Funktionselement
- 14: Drahtführungselement
- 15: Klemmelement
- 16: Streifenhalter
- 17: Führungsschiene
- 18: Kante
- 19: Kante
- 20: Verankerungselement
- 21: Vorsprung
- 22: Unterseite
- 23: Halteelement
- 24: Oberseite
- 25: Aufnahmeabschnitt
- 26: Führungselement
- 27: Vorsprung
- 28: Doppelpfeil
- 29: Pfeil
- 30: Streifenhalter
- 31: Vorsprung
- 32: Abschnitt

## Patentansprüche

1. Verteilereinrichtung einer Telekommunikationsanlage, insbesondere Verteilerblock, mit mehreren übereinander und/oder nebeneinander angeordneten Verteilerleisten (12), wobei jede der Verteilerleisten (12) mindestens ein Funktionselement (13) für den Anschluss ankommender bzw. abgehender Kabeladern aufweist, und mit einer Kennzeichnungseinrichtung zur Kennzeichnung der Belegung der Funktionselemente (13), **dadurch gekennzeichnet, dass** die Kennzeichnungseinrichtung mindestens einen entlang der übereinander und/oder nebeneinander angeordneten Verteilerleisten (12) bzw. Funktionselemente (13) verschiebbaren Streifenhalter (16; 30) aufweist, wobei der oder jeder Streifenhalter (16) an Führungsschienen (17) geführt ist, die sich an Seiten der übereinander und/oder nebeneinander angeordneten Verteilerleisten (12) bzw. Funktionselemente (13) erstrecken.

2. Verteilereinrichtung nach Anspruch 1, **dadurch gekennzeichnet, dass** der oder jeder Streifenhalter (16) an einer Oberseite einen Aufnahmeabschnitt (25) für einen Belegungskennzeichnungsstreifen aufweist, und dass der oder jeder Streifenhalter (16) an einer Unterseite klippartige Halteelemente (23) aufweist, über die der Streifenhalter (16) an den Führungsschienen (17) befestigbar bzw. lagerbar ist.

3. Verteilereinrichtung nach Anspruch 1 oder 2, **dadurch gekennzeichnet, dass** jede der Führungsschienen (17) zwei parallel zu den übereinander und/oder nebeneinander angeordneten Verteilerleisten (12) bzw. Funktionselementen (13) verlaufende Kanten aufweist, wobei jede Führungsschiene (17) mit einer ersten Kante (18) an der Verteilereinrichtung befestigt ist, und wobei an der zweiten Kante (19) der oder jeder Streifenhalter (16) befestigt bzw. gelagert ist.

4. Verteilereinrichtung nach einem oder mehreren der Ansprüche 1 bis 3, **dadurch gekennzeichnet, dass** der oder jeder Streifenhalter (16) in seiner Relativposition zu den Verteilerleisten (12) bzw. Funktionselementen (13) arretierbar ist, vorzugsweise durch formschlüssigen oder reibschlüssigen Kontakt mit Führungsschienen (17), an welchen der jeweilige Streifenhalter (16) geführt ist.

5. Verteilereinrichtung nach einem oder mehreren der Ansprüche 1 bis 4, **dadurch gekennzeichnet, dass** der oder jeder Streifenhalter (16) an Führungsschienen (17) derart geführt ist, dass ein Streifenhalter (16) in einer Ruhestellung in seiner Position relativ zu den Führungsschienen (17) formschlüssig und/oder reibschlüssig an den Führungsschienen (17) arretiert ist, und dass der Streifenhalter (16) in einer Betätigungsstellung durch Aufbringen einer senkrecht zu den Führungsschienen (17) gerichteten Kraft an den Führungsschienen (17) entarretiert und dann parallel zu den Führungsschienen verschiebbar ist.

6. Verteilereinrichtung nach einem oder mehreren der Ansprüche 1 bis 5, **dadurch gekennzeichnet, dass** die Führungsscheinen (17) sich parallel zu mehreren sandwichartig übereinander oder nebeneinander angeordneten Verteilerleisten (12) bzw. Funktionselementen (13) erstrecken, wobei der oder jeder Streifenhalter (17) mindestens die Breite einer Verteilerleiste bzw. eines Funktionselements aufweist.

7. Verteilereinrichtung nach einem oder mehreren der Ansprüche 1 bis 6, **dadurch gekennzeichnet, dass** die Führungsscheinen sich parallel zu mehreren sandwichartig übereinander oder nebeneinander angeordneten Verteilerleisten bzw. Funktionselementen erstrecken, wobei der oder jeder Streifenhalter die Breite von mindestens zwei Verteilerleisten bzw. Funktionselementen aufweist.

8. Kennzeichnungseinrichtung für eine Verteilereinrichtung nach dem Oberbegriff des Anspruchs 1 mit mindestens einem Streifenhalter, **dadurch gekennzeichnet, dass** der oder jeder Streifenhalter (16) an Führungsschienen der Verteilereinrichtung (17) geführt sein kann, die sich an Seiten der übereinander und/oder nebeneinander angeordneten Verteilerleisten (12) bzw. Funktionselemente der Verteilereinrichtung (13) erstrecken, sodass der oder jeder Streifenhalter (16) entlang mehrerer übereinander und/oder nebeneinander angeordneter Verteilerleisten bzw. Funktionselemente verschiebbar ist.

9. Kennzeichnungseinrichtung nach Anspruch 8, **gekennzeichnet durch** Merkmale nach einem der Ansprüche 2 bis 7.

## Claims

1. Distribution device for a telecommunications system, in particular a distribution block, having a plurality of distribution strips (12) which are arranged one on top of the other and/or alongside one another, with each of the distribution strips (12) having at least one functional element (13) for connection of incoming and outgoing cable cores, and having an identification device for identification of the fitting of the functional elements (13), **characterized in that** the identification device has at least one strip holder (16; 30), which can be moved along the distribution strips (12) and/or functional elements (13) which are one above the other and/or alongside one another, with the or each strip holder (16) being guided on guide rails (17) which extend on sides of the distribution strips (12) and/or functional elements (13) which are arranged one above the other and/or alongside one another.

2. Distribution device according to Claim 1, **characterized in that** the or each strip holder (16) has a holding section (25) for a fitting identification strip on an upper face, and **in that** the or each strip holder (16) has clip-like holding elements (23) on a lower face, via which the strip holder (16) can be attached to or mounted on the guide rails (17).

3. Distribution device according to Claim 1 or 2, **characterized in that** each of the guide rails (17) has two edges which run parallel to the distribution strips (12) and/or functional elements (13) which are arranged one above the other and/or alongside one another, with each guide rail (17) being attached by a first edge (18) to the distribution device, and with the or each strip holder (16) being attached to or mounted on the secnod edge (19).

4. Distribution device according to one or more of Claims 1 to 3, **characterized in that** the or each strip holder (16) can be locked in its relative position with respect to the distribution strips (12) and/or functional elements (13), preferably by interlocking or friction-fitting contact with guide rails (17) on which the respective strip holder (16) is guided.

5. Distribution device according to one or more of Claims 1 to 4, **characterized in that** the or each strip holder (16) is guided on guide rails (17) such that, in a rest position, a strip holder (16) is locked with an interlock and/or a friction fit to the guide rails (17) in its position relative to the guide rails (17), and **in that**, in an operating position, the strip holder (16) is unlocked from the guide rails (17) for application of a force at right angles to the guide rails (17), and can then be moved parallel to the guide rails.

6. Distribution device according to one or more of Claims 1 to 5, **characterized in that** the guide rails (17) extend parallel to a plurality of distribution strips (12) and/or functional elements (13) which are arranged in the form of a sandwich one above the other or alongside one another, with the or each strip holder (16) having at least the same width as a distribution strip or a functional element.

7. Distribution device according to one or more of Claims 1 to 6, **characterized in that** the guide rails extend parallel to a plurality of distribution strips and/or functional elements which are arranged in the form of a sandwich one above the other or alongside one another, with the or each strip holder having the same width as at least two distribution strips and/or functional elements.

8. Identification device for a distribution device according to the precharacterizing clause of Claim 1, having at least one strip holder, **characterized in that** the or each strip holder (16) can be guided on guide rails (17) of the distribution device which extend on sides of the distribution strips (12) and/or functional elements (13) of the distribution device which are arranged one above the other and/or along side one another, such that the or each strip holder (16) can be moved along a plurality of distribution strips and/or functional elements which are arranged one above the other and/or alongside one another.

9. Identification device according to Claim 8, **characterized by** features according to one of Claims 2 to 7.

## Revendications

1. Dispositif de distribution d'une installation de télécommunications, en particulier bloc de distribution, comprenant plusieurs barrettes de distribution (12) disposées les unes au-dessus des autres et/ou les unes à côté des autres, chacune des barrettes de distribution (12) présentant au moins un élément fonctionnel (13) pour le raccordement de conducteurs de câbles entrants ou sortants, et comprenant un dispositif d'identification pour identifier l'occupation des éléments fonctionnels (13), **caractérisé en ce que** le dispositif d'identification présente au moins un support de bande (16 ; 30) mobile le long des barrettes de distribution (12) ou des éléments fonctionnels (13) disposés les uns au-dessus des autres et/ou les uns à côté des autres, le ou chaque support de bande (16) étant guidé sur des rails de guidage (17) qui s'étendent sur des côtés des barrettes de distribution (12) ou des éléments fonctionnels (13) disposés les uns au-dessus des autres et/ou les uns à côté des autres.

2. Dispositif de distribution selon la revendication 1, **caractérisé en ce que** le ou chaque support de bande (16) présente, sur un côté supérieur, une portion de réception (25) pour une bande d'identification d'occupation, et **en ce que** le ou chaque support de bande (16) présente, sur un côté inférieur, des éléments de retenue (23) de type pinces, qui permettent de fixer ou de supporter le support de bande (16) sur les rails de guidage (17).

3. Dispositif de distribution selon la revendication 1 ou 2, **caractérisé en ce que** chacun des rails de guidage (17) présente deux arêtes s'étendant parallèlement aux barrettes de distribution (12) ou aux éléments fonctionnels (13) disposés les uns au-dessus des autres et/ou les uns à côté des autres, chaque rail de guidage (17) étant fixé avec une première arête (18) sur le dispositif de distribution, et le ou chaque support de bande (16) étant fixé ou supporté sur la deuxième arête (19).

4. Dispositif de distribution selon l'une quelconque ou plusieurs des revendications 1 à 3, **caractérisé en ce que** le ou chaque support de bande (16) peut être bloqué dans sa position relative par rapport aux barrettes de distribution (12) ou aux éléments fonctionnels (13), de préférence par contact par engagement par coopération de forme ou par engagement par friction avec des rails de guidage (17) sur lesquels est guidé le support de bande respectif (16).

5. Dispositif de distribution selon l'une quelconque ou plusieurs des revendications 1 à 4, **caractérisé en ce que** le ou chaque support de bande (16) est guidé sur des rails de guidage (17) de telle sorte qu'un support de bande (16) soit bloqué dans une position de repos dans sa position par rapport aux rails de guidage (17) par engagement par coopération de forme ou par engagement par friction sur les rails de guidage (17), et **en ce que** le support de bande (16) peut être débloqué dans une position d'actionnement par l'application d'une force orientée perpendiculairement aux rails de guidage (17) sur les rails de guidage (17) puis être déplacé parallèlement aux rails de guidage.

6. Dispositif de distribution selon l'une quelconque ou plusieurs des revendications 1 à 5, **caractérisé en ce que** les rails de guidage (17) s'étendent parallèlement à plusieurs barrettes de distribution (12) ou éléments fonctionnels (13) disposés en sandwich les uns au-dessus des autres ou les uns à côté des autres, le ou chaque support de bande (16) présentant au moins la largeur d'une barrette de distribution ou d'un élément fonctionnel.

7. Dispositif de distribution selon l'une quelconque ou plusieurs des revendications 1 à 6, **caractérisé en ce que** les rails de guidage s'étendent parallèlement à plusieurs barrettes de distribution ou éléments fonctionnels disposés en sandwich les uns au-dessus des autres ou les uns à côté des autres, le ou chaque support de bande présentant la largeur d'au moins deux barrettes de distribution ou éléments fonctionnels.

8. Dispositif d'identification pour un dispositif de distribution selon le préambule de la revendication 1, comprenant au moins un support de bande, **caractérisé en ce que** le ou chaque support de bande (16) peut être guidé sur des rails de guidage (17) du dispositif de distribution, qui s'étendent sur des côtés des barrettes de distribution (12) ou des éléments fonctionnels (13) disposés les uns au-dessus des autres et/ou les uns à côté des autres, de sorte que le ou chaque support de bande (16) puisse être déplacé le long de plusieurs barrettes de distribution ou éléments fonctionnels disposés les uns au-dessus des autres et/ou les uns à côté des autres.

9. Dispositif d'identification selon la revendication 8, **caractérisé par** des caractéristiques selon l'une quelconque des revendications 2 à 7.
